(19) Europäisches Patentamt
European Patent Office
Office européen des brevets

(11) **EP 0 919 834 B1**

(12) **EUROPÄISCHE PATENTSCHRIFT**

(45) Veröffentlichungstag und Bekanntmachung des Hinweises auf die Patenterteilung:
**03.04.2002 Patentblatt 2002/14**

(51) Int Cl.$^7$: **G01S 13/22**, G01S 13/532, G01S 13/30

(21) Anmeldenummer: **98120650.1**

(22) Anmeldetag: **04.11.1998**

(54) **Verfahren zur Detektion eines Zieles mittels einer HPRF-Radaranlage**

Method for detecting a target by means of a HPRF radar

Procédé pour détecter une cible utilisant un radar HPRF

(84) Benannte Vertragsstaaten:
**AT CH DE FR GB LI NL**

(30) Priorität: **15.11.1997 DE 19750742**

(43) Veröffentlichungstag der Anmeldung:
**02.06.1999 Patentblatt 1999/22**

(73) Patentinhaber: **EADS Deutschland GmbH**
**81663 München (DE)**

(72) Erfinder: **Nagel, Dieter, Dr.**
**89155 Erbach (DE)**

(74) Vertreter: **Meel, Thomas**
**Dornier GmbH**
**L H G**
**88039 Friedrichshafen (DE)**

(56) Entgegenhaltungen:
**US-A- 3 765 017**

- **GERLACH K ET AL: "CASCADED DETECTOR FOR MULTIPLE HIGH-PRF PULSE DOPPLER RADARS" IEEE TRANSACTIONS ON AEROSPACE AND ELECTRONIC SYSTEMS, Bd. 26, Nr. 5, 1. September 1990, Seiten 754-767, XP000173284**
- **SKOLNIK, M.I.: "Pulse Doppler Radar" RADAR HANDBOOK,1970, Seiten 19:13-19:17, XP002097847**

**Beschreibung**

Die Erfindung geht aus von einem Verfahren zur Detektion eines Zieles mittels einer HPRF-Radaranlage nach dem Patentanspruch 1.

Die Erfindung betrifft insbesondere die Detektion von schnell bewegten Zielen, beispielsweise Flugzeugen, mittels einer Puls-Doppler-Radaranlage. Dabei wird von einer Sende/Empfangs-Antenne eine Folge (Burst) von im allgemeinen modulierten Pulsen ausgesandt. Diese werden an einem zu detektierenden Ziel, beispielsweise einem Flugzeug, reflektiert und von der Sende/Empfangsantenne empfangen. Eine Ermittlung der Geschwindigkeit und der Entfernung des Zieles ist möglich durch eine Auswertung der gemessenen Laufzeit beziehungsweise Dopplerverschiebung der Pulse. Dabei können in an sich bekannter Weise insbesondere bei der Ermittlung der Entfernung des Zieles störende Mehrdeutigkeiten auftreten. Das heißt, zu jeder vorgebbaren Pulswiederholfrequenz (PRF, "Pulse Repetition Frequency") gibt es einen Entfernungs-Eindeutigkeitsbereich. Dieser ist um so kleiner, je höher die PRF gewählt ist. Andererseits wird eine hohe PRF (HPRF, "High Pulse Repetition Frequency") benötigt, um auch bei schnell bewegten Zielen, beispielsweise schnell fliegenden Flugzeugen, einen möglichst hohe Geschwindigkeitseindeutigkeitsbereich zu erhalten. Soll nun bei einem vorgebbaren hohen Geschwindigkeitseindeutigkeitsbereich ein großer erweiterter Entfernungs-Eindeutigkeitsbereich vorhanden sein, so ist es naheliegend, eine HPRF-Radaranlage mit mindestens zwei umschaltbaren PRFs zu verwenden. Dabei erfolgt im allgemeinen bei jeder Aussendung eines Bursts ein Wechsel der PRF, das heißt, es wird im allgemeinen zyklisch zwischen den verwendeten PRFs umgeschaltet. Es werden nun die zu jeder PRF gehörenden empfangenen Echopulse ausgewertet und mit denjenigen anderer PRFs verglichen. Unter der Annahme, daß ein Ziel von den Pulsen mehrerer unterschiedlicher PRFs getroffen wird, kann sowohl die Geschwindigkeit des Zieles als auch dessen Entfernung in dem erweiterter Entfernungs-Eindeutigkeitsbereich ermittelt werden.

Der Erfindung liegt die Aufgabe zugrunde, ein gattungsgemäßes Verfahren dahingehend zu verbessern, daß insbesondere für schnell bewegte Ziele sowohl ein hoher eindeutiger Geschwindigkeitsbereich mit hoher Geschwindigkeitsauflösung als auch eine hohe Entfernungs-Auflösung in einem vorgebbaren erweiterten Entfernungs-Eindeutigkeitsbereich erreicht wird.

Diese Aufgabe wird gelöst durch die im Patentanspruch 1 angegebenen Merkmale. Vorteilhafte Ausgestaltungen und/oder Weiterbildungen sind den weiteren Ansprüchen entnehmbar.

Die Erfindung wird im folgenden anhand von Ausführungsbeispielen näher erläutert unter Bezugnahme auf schematisch dargestellte Figuren. Es zeigen

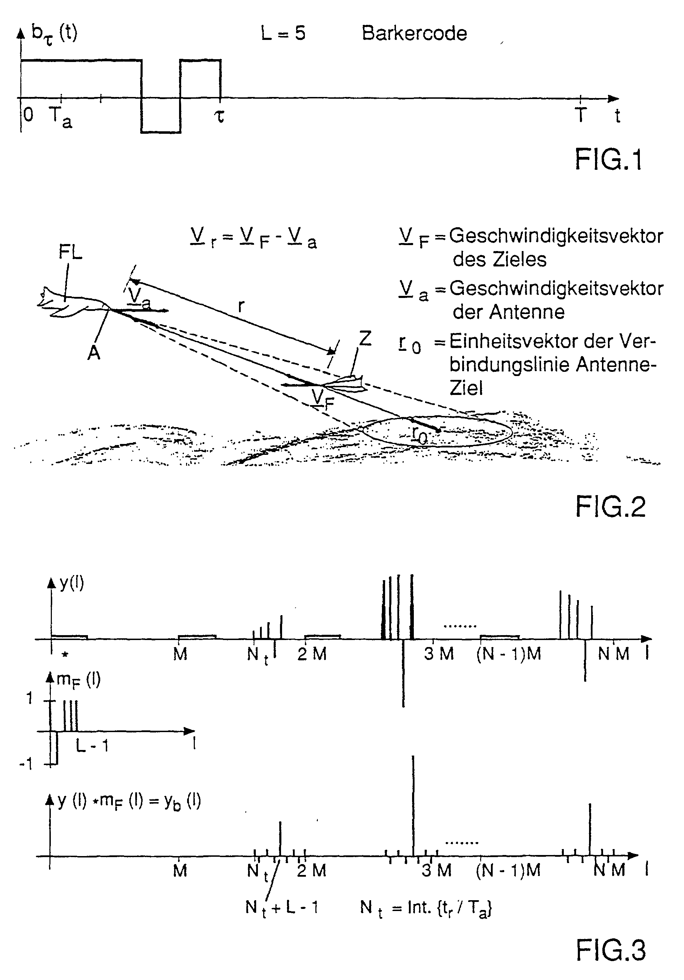

Fig.1 bis Fig.13     schematisch dargestellte Diagramme zur Erläuterung der Erfindung.

Bei dem im folgenden erläuterten Verfahren wird eine an sich bekannte HPRF-Radaranlage verwendet. Diese besteht insbesondere aus einer (Radar-)Antenne zur Aussendung von gepulsten Sende-Signalen in einem vorgebbaren (Radar-)Frequenzbeich und zum Empfang der entsprechenden Echosignale. Diese werden in an sich bekannter Weise in einen vorgebbaren Zwischenfrequenzbereich herabgemischt und anschließend demoduliert, so daß Pulse entstehen, aus denen mittels einer Laufzeitmessung sowohl die Geschwindigkeit als auch die Entfernung eines oder mehrerer Ziele ermittelt werden kann.

Von der (Radar-)Antenne wird ein Sendesignal ausgesendet entsprechend der Formel

$$s(t) = \left(\sum_{i=0}^{N-1} b_\tau(t - iT)\right) \cdot e^{j \cdot 2 \cdot \pi \cdot f_0 \cdot t} \qquad (1).$$

Dieses besteht aus einem codierten Signal $b_\tau(t)$, das sich in der Zeit T periodisch wiederholt und das mit dem Term $e^{j \cdot 2 \cdot \pi \cdot f_0 \cdot t}$ moduliert ist, wobei $f_O$ die verwendete Sendefrequenz, beispielsweise 10 GHz, bedeutet. N ist dabei die Anzahl der ausgesendeten codierten Signale $b_\tau(t)$. Fig.1 zeigt ein Beispiel für ein codiertes Sendesignal, bei dem ein Barkercode mit L=5 verwendet wird.

Fig.2 zeigt ein fliegendes Flugzeug FL, dessen (bewegte) (Radar-)Antenne A ein ebenfalls bewegtes Ziel Z erfaßt hat. Dieses befindet sich in einem Abstand r von der Antenne A und nähert sich dieser mit einer Relativgeschwindigkeit $\underline{V}_r \cdot \underline{r}_O$, mit $\underline{V}_r = \underline{V}_F - \underline{V}_a$ , wobei

$\underline{r}_O$ den Einheitsvektor auf der Verbindungslinie von der Antenne A zu dem Ziel Z,
$\underline{V}_F$ den Geschwindigkeitsvektor des Zieles Z,
$\underline{V}_a$ den Geschwindigkeitsvektor der Antenne A und
$\underline{V}_r$ den resultierenden Geschwindigkeitsvektor bedeuten.

Wird ein nichtfluktuierendes (ständig vorhandenes) Ziel Z vorausgesetzt, so werden an diesem die Sendesignale entsprechend Formel (1) zeitlich fortlaufend reflektiert und es entstehen Echosignale, die von der Antenne A empfangen werden. Nach einer Demodulation mit der Sendefrequenz $f_O$ und einer daran anschließenden Analog/Digital-Wandlung entsteht ein Empfangssignal y(l) entsprechend der Formel

$$y(l) = a \cdot (\sum_{i=N_r}^{N-1} b_{tr}(T^* - iT + lT_a)) \cdot e^{j \cdot 2 \cdot \pi \cdot f_D \cdot T_a \cdot l + j \cdot \varphi'} \qquad (2).$$

Dabei wurde das demodulierte Echosignal pro Subpuls (des Analog/Digital-Wandlers) genau einmal abgetastet, das heißt, es wird eine Abtastdauer $T_a$ (Fig.1) verwendet. Die beiden wichtigsten Parameter in Formel (2) sind die Laufzeit $t_r$ eines codierten Pulses und die Dopplerverschiebung $f_D$ des ausgesandten Signals. Mit der Lichtgeschwindigkeit c ergeben sich die Formeln

$$t_r = 2 \bullet r/c ,$$
$$f_D = 2 \bullet (\underline{V}_F - \underline{V}_a) \bullet \underline{r}_0/\lambda \text{ und} \qquad (3)$$
$$N_r = \text{Int}[t_r/T],$$

wobei λ die Wellenlänge des Sendesignals und Int[] die Funktion "größte ganze Zahl von" bedeuten.
Mit dem in Formel (2) umbenannten empfangenen codierten Signal $b_{tr}(t)$ wird angedeutet, daß in Abhängigkeit von der Laufzeit $t_r$ das an sich empfangene Signal $b_\tau(t)$ ganz, teilweise oder gar nicht ausgeblendet wird. Die weiteren Parameter in Formel (2) sind die Empfangsamplitude a und die Zeit T*, mit der bei der Abtastung eine vorgebbare zeitliche Verzögerung, die im wesentlichen durch die Bauart des Analog/Digital-Wandlers bestimmt ist, erfolgt.
Nach der Abtastung durchläuft das Empfangssignal y(l) (Formel (2)) ein an das Sendesignal angepaßtes sogenanntes Matched-Filter $m_F(l)$, das an den nicht ausgeblendeten Sendecode $b_\tau(t)$ angepaßt ist. Ist L die Länge des Sendecodes, so entsteht nach dem Matched-Filter $m_F(l)$ ein Ausgangssignal $y_b(l)$ entsprechend den Formeln

$$y_b(l) = m_F(l) * y(l), \text{ mit } m_F(l) = b(L-1) \qquad (4),$$

wobei * den Faltungsoperator bedeutet.
In Fig.3 ist die Faltung des Empfangssignals y(l) mit dem Matched-Filter $m_F(l)$ veranschaulicht.
Es ist nun vorteilhaft, die bei der Analog/Digital-Wandlung verwendete Abtastfrequenz $f_a$ als ganzzahliges Vielfaches M der verwendeten vorgebbaren Pulswiederholfrequenz PRF zu wählen entsprechend den Formeln

$$f_a = M \bullet PRF \text{ mit } PRF = 1/T \text{ und } f_a = 1/T_a \qquad (5).$$

Es ist nun möglich, die entsprechend Formel (4) ermittelten Abtastwerte $y_b(l)$ in Form einer Matrix $a_b(k,i)$ anzuordnen entsprechend der Formel

$$a_b(k,i) = \begin{pmatrix} y_b(M \cdot k + 0) \\ y_b(M \cdot k + 1) \\ \bullet \\ \bullet \\ y_b(M \cdot k + i) \\ \bullet \\ \bullet \\ \bullet \\ \bullet \\ y_b(M \cdot k + M - 1) \end{pmatrix} \text{, mit} \qquad (6)$$

k = 0,...,N-1 und i = 0,...,M-1.

Aus dieser Formel (6) geht hervor, daß jedem Zeilenvektor ein Entfernungsbereich zugeordnet werden kann. Es ist bekannt, daß bei einer Radaranlage der eindeutige Entfernungsbereich $R_e$ ermittelt werden kann entsprechend der Formel

$$R_e = c \cdot T/2 = c/(2 \cdot PRF) \qquad (7).$$

Wird nun dieser eindeutige Entfernungsbereich $R_e$ in genau M unterscheidbare Entfernungsbereiche unterteilt, so ist die Länge $R_L$ eines Entfernungstores ermittelbar entsprechend der Formel

$$R_L = R_e/M = (c \cdot T)/(2 \cdot M) \text{ , mit } T = M \cdot T_a \text{ folgt}$$

$$R_L = c \cdot T_a/2 \qquad (8).$$

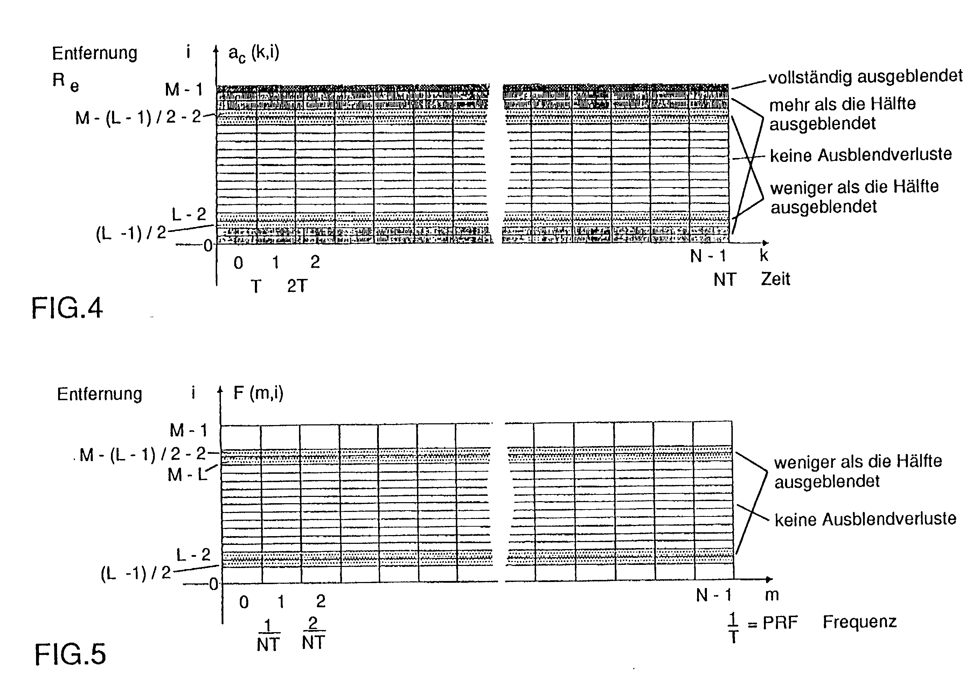

Es ergibt sich also eine Zeit-Entfernungsmatrix, die in Fig.4 dargestellt ist.

Diese Zeit-Entfernungsmatrix wird nun mittels einer Fourier-Transformation, vorzugsweise einer DFT ("Discret Fourier-Transformation") oder einer FFT ("Fast Fourier-Transformation") in eine Frequenz-Entfernungsmatrix F (m,i) überführt entsprechend der Formel

$$F(m,i) = \sum_{k=0}^{N-1} w(k) \cdot a_b(k,i) \cdot e^{-j \cdot 2 \cdot \pi \cdot m \cdot k/N} \qquad (9),$$

mit $0 \leq i \leq M-1$ und m = 0, 1, ..., N-1.

Dabei bedeutet w(k) eine vorgebbare Fensterfunktion, beispielsweise ein Dolph-Chebyschev-Fenster, die zur Unterdrückung von Nebenzipfeln im Frequenzbereich dient. Eine solche Frequenz-Entfernungsmatrix ist in Fig.5 dargestellt.

Wird nun beispielsweise die untere Grenze der Pulswiederholfrequenz PRF gewählt entsprechend der Formel

$$PRF \geq 130 \text{ kHz ,}$$

so ergibt sich mittels Formel (7) die obere Grenze des eindeutigen Entfernungsbereiches aus der Formel

$$R_e \leq 1154 \text{ m} \qquad (10).$$

Wird nun in Abhängigkeit von einer anzunehmenden größten Zielabmessung die maximale Länge $R_L$ eines Entfernungstores vorgegeben entsprechend $R_L$ = 25 m, so folgt aus Formel (8) für die Ermittlung der maximalen Anzahl M der Entfernungstore innerhalb des eindeutigen Entfernungsbereiches

$$M \leq 46 \tag{11}.$$

Ist nun beispielsweise ein Radaranlage auf eine maximale Reichweite von ungefähr 100 km ausgelegt und wird ein (Radar-)Ziel in dem Entfernungstor $i_m$ detektiert, so sind diesem Ziel an sich genau 100 mehrdeutige Entfernungstore $i_e$ zuzuordnen entsprechend der Formel

$$i_e = i_m + u \bullet M, \tag{12}$$

mit $0 \leq i_m \leq M-1$ und $0 \leq u \leq Int[R_w/R_e]$, wobei $R_w$ den gewünschten Eindeutigkeitsbereich bezeichnet. Die Lage des Zieles innerhalb des eindeutigen Entfernungsbereiches wird nun ermittelt mittels einer an sich bekannten Umschaltung der Pulswiederholfrequenzen von Burst zu Burst und einer Auswertung mittels des sogenannten chinesischen Restsatzes, was nachfolgend näher erläutert wird.

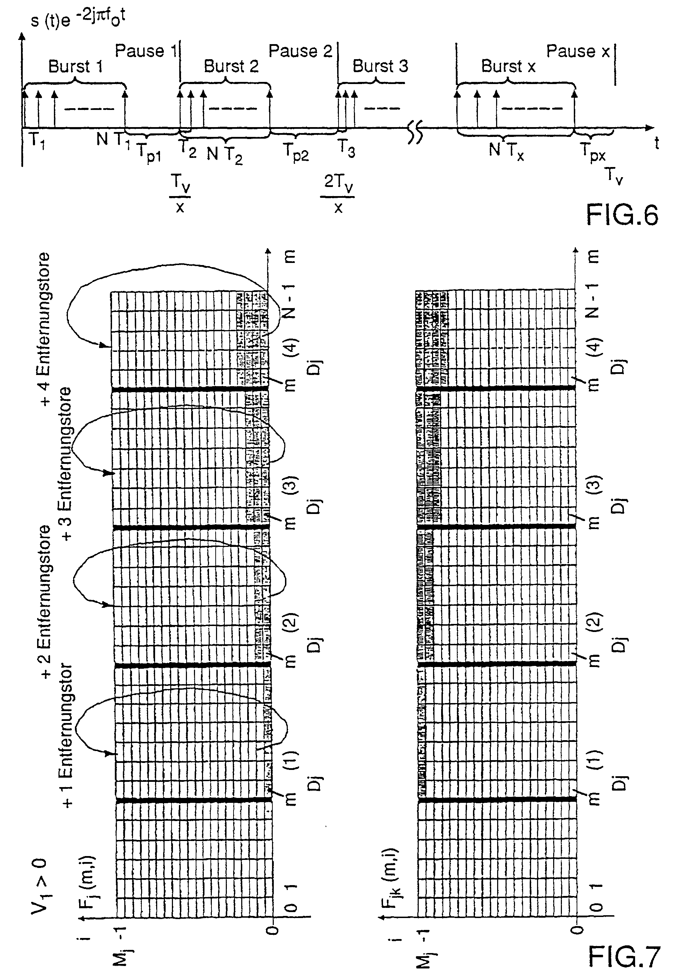

Zur Auflösung der erwähnten Mehrdeutigkeiten im Entfernungsbereich werden mehrere verschiedene Pulswiederholfrequenzen PRFs benötigt, da bei einer realen Anwendung Störungen vorhanden sind, beispielsweise Ausblendungen sowie andere Verluste. Fig.6 zeigt einen zeitlichen Ablauf eines vorgebbaren Verarbeitungszyklus, bei dem x verschiedene PRFs, die zeitlich nacheinander (zyklisch) durchlaufen werden, verwendet werden. Es wird vorgegeben, daß bei jedem Burst die Anzahl N der Pulse konstant bleibt.

Ein Verarbeitungszyklus besteht demnach aus x verschiedenen Bursts der Länge $N \bullet T_j$ mit $1 \leq j \leq x$ und x verschieden langen Pausenzeiten $T_{Pj}$, mit $1 \leq j \leq x$, die derart gewählt werden, daß die Formel gilt

$$(NT_j + T_{Pj}) = const. = T_v/x \text{ mit } 1 \leq j < x \tag{13}.$$

Die beschriebene Wahl der Pausenzeiten $T_{Pj}$ entsprechend Formel (13) ist keine Notwendigkeit, jedoch wird damit die nachfolgend beschriebene mathematische Darstellung der Signalverarbeitung einfacher und überschaubarer.

Zur Erzeugung des Sendesignals wird jeder einzelne Impuls innerhalb eines Bursts mit einem vorgebbaren Sendecode gefaltet. Bevor aber die im Entfernungsbereich auftretenden Mehrdeutigkeiten mittels der verschiedenen Pulswiederholfrequenzen aufgelöst werden können, müssen die einzelnen Matrizen noch eine Vorverarbeitung in Form einer Kompensation der Zielbewegung (Bewegung eines Zieles) durchlaufen, was nachfolgend erläutert wird. Aus US 3 765 017 A ist eine HPRF Radaranlage nach dem Patentanspruch 1 bekannt.

Ist ein Verarbeitungszyklus entsprechend Fig.6 beendet, so sind x Matrizen

$$F_j(m,i), \text{ mit } 0 \leq m \leq N-1, \ 0 \leq i \leq M_j-1, \ 1 \leq j \leq x \tag{14}$$

zu verarbeiten.

Ausgewertet wird eine aktuelle Matrix, die wegen des zyklischen Durchlaufens der verschiedenen Pulswiederholfrequenzen im folgenden immer mit

$$F_1(m,i) \text{ mit } 0 \leq m \leq N-1 \text{ und } 0 \leq i \leq M_1-1 \tag{15}$$

bezeichnet wird. Diese aktuelle Matrix $F_1(m,i)$ wird dann mit den x-1 zurückliegenden Matrizen, die aber Zieldaten zu anderen Zeitpunkten enthalten, verglichen. Es wird nun angenommen, daß sich das Ziel innerhalb der Verarbeitungszeit $T_v$ mit einer konstanten Geschwindigkeit $v_1$ bewegt. Dann hat sich die Zielposition für ein Ziel, das in der Matrix $F_j(m,i)$ mit den Zieldaten $r_1$ und $v_1$ erscheint, vergleiche Fig.2, um folgende Differenz $\Delta r_j$ geändert

$$\Delta r_j = r_j - r_1 = v_1(j-1) \bullet T_v/x, \text{ mit } v_1 = (\underline{v}_F - \underline{v}_a)\underline{r}_O \tag{16}$$

und j = 1, 2, ..., x.

Die Länge eines Entfernungstores beträgt $R_L$. Gilt die Formel

$$|\Delta r_j| \geq z \cdot R_L , \qquad (17)$$

so hat ein Ziel, beispielsweise ein Flugzeug, bis zur "j-ten Vergleichsmatrix" mindestens z Entfernungstore überflogen. Die Geschwindigkeit $v_1$ ist aus der aktuellen Matrix $F_1(m,i)$ ermittelbar. Dazu wird über die Beziehung

$$f_{D1} = (2 \cdot f_0/c) \cdot v_1$$

der Geschwindigkeit $v_1$ die der j-ten Matrix entsprechende diskrete Frequenzvariable $m_{Dj}$ zugeordnet entsprechend den Vorschriften

1.) bei $v_1 > 0$ , das heißt, ein Ziel nähert sich der Antenne, dann ist

$$m_{Dj} = f_{D1} \cdot N \cdot T_j ; \qquad (18a)$$

2.) bei $v_1 < 0$, das heißt, ein Ziel entfernt sich von der Antenne, dann ist

$$m_{Dj} = N + f_{D1} \cdot N \cdot T_j \qquad (18b).$$

Werden die Formel (18) und (16) in die Formel (17) eingesetzt, so ergeben sich die Formeln

1.) bei $v_1 > 0$ ist
$$\qquad (19a)$$

$$m_{Dj}(z) \geq \frac{T_a}{T_v} \cdot \frac{x}{j-1} \cdot f_0 N T_j z$$

2.) bei $v_1 < 0$ ist
$$\qquad (19b),$$

$$m_{Dj}(z) \leq -z \frac{T_a}{T_v} \cdot \frac{x}{j-1} \cdot f_0 N T_j + N$$

mit $0 \leq m_{Dj} \leq N-1$ und $2 \leq j \leq x$ .

Da $m_{Dj}$ eine ganze Zahl ist, sind die Formeln (18) und (19) mathematisch nicht ganz exakt. Es tritt ein Fehler auf, der aber bei großem N (N > 1024) vernachlässigbar ist.

Aus der Formel (19) ergibt sich die Erkenntnis, daß Ziele, deren diskrete Frequenzvariable in der j-ten Matrix die Formel (19) erfüllen, in der aktuellen Matrix um z Entfernungstore näher an die Antenne ($v_1 > 0$) oder um z Entfernungstore von der Antenne ($v_1 < 0$) entfernt positioniert sind.

Sollen die zeitlich zurückliegenden Matrizen $F_j(m,i)$ mit der aktuellen Matrix verglichen und die Entfernungsmehrdeutigkeiten aufgelöst werden, beispielsweise mittels des chinesischen Restsatzes, so müssen die Positionsunterschiede kompensiert werden. Dabei entsteht eine kompensierte Matrix $F_{jk}(m,i)$, die aus der Matrix $F_j(m,i)$ durch folgende Operationen hervorgeht:

1.) bei $v_1$ > 0 ist

$$F_{jk}(m,i) = \begin{cases} F_j(m,i); & \text{für } 0 \leq m < m_{Dj}(1) \\ F_j(m,(i-1)\bmod M_j); & \text{für } m_{Dj}(1) \leq m < m_{Dj}(2) \\ \qquad \bullet \\ \qquad \bullet \\ \qquad \bullet \\ F_j(m,(i-z)\bmod M_j); & \text{für } m_{Dj}(z) \leq m < m_{Dj}(z+1) \\ \qquad \bullet \\ \qquad \bullet \\ \qquad \bullet \end{cases} \tag{20a}$$

2.) bei $v_1$ < 0 ist

$$F_{jk}(m,i) = \begin{cases} F_j(m,i); & \text{für } N-1 \geq m > m_{Dj}(1) \\ F_j(m,(i+1)\bmod M_j); & \text{für } m_{Dj}(1) \geq m > m_{Dj}(2) \\ \qquad \bullet \\ \qquad \bullet \\ \qquad \bullet \\ F_j(m,(i+z)\bmod M_j); & \text{für } m_{Dj}(z) \geq m > m_{Dj}(z+1) \\ \qquad \bullet \\ \qquad \bullet \\ \qquad \bullet \\ \qquad \bullet \end{cases} \tag{20b}$$

Dieser Vorgang ist für $v_1$ > 0 in Fig.7 dargestellt. Dabei sind bestimmte, vorgebbare Zeilenabschnitte um die der überflogenen Entfernungstore entsprechende Zeilenzahl zu verschieben. Die in der Matrix unten herausfallenden Zeilenabschnitte werden, wie es die Moduloperation mod in Formel (20a) vorschreibt, oben wieder eingefügt, was in Fig.7 durch Pfeile dargestellt ist.

Werden zur Entfernungsbestimmung mehrere Pulswiederholfrequenzen benötigt, so kann die Entfernung eines Zieles grundsätzlich lediglich auf zwei Entfernungstore genau bestimmt werden. Dieses liegt daran, daß man die genaue Position eines Zieles innerhalb eines Entfernungstores nicht genau kennt und damit das Ziel beim Wechsel der Pulswiederholfrequenz in ein benachbartes Entfernungstor gelangen kann. Befindet sich ein Ziel nun beispielsweise am Rande eines Entfernungstores, so genügt eine relativ geringe Geschwindigkeit, damit das Ziel bei der nachfolgenden PRF in ein benachbartes Entfernungstor verschoben wird. Eine solche Zielwanderung ist aber mit dem vorstehenden Verfahren nicht korrigierbar und muß daher bei der Wahl der Pulswiederholfrequenzen berücksichtigt werden.

Die zu einer Pulswiederholfrequenz gehörende Pulswiederholdauer $T_j$ wird durch die Anzahl der zugehörigen Entfernungstore $M_j$ festgelegt, entsprechend der Formel

$$T_j = M_j \cdot T_a, \tag{21}$$

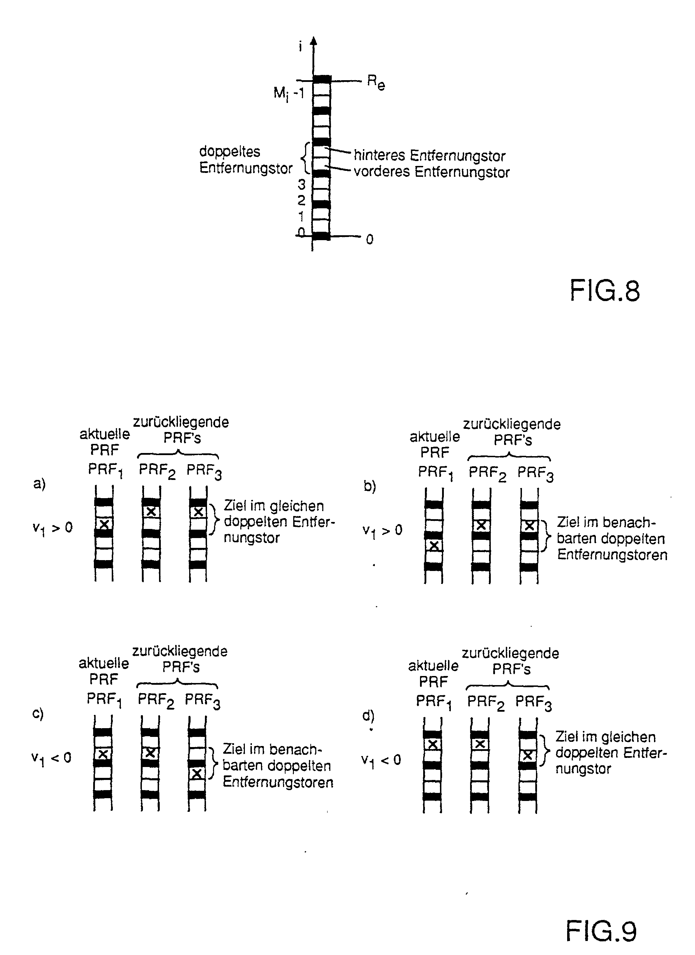

wobei $T_a$ die Abtastfrequenz bedeutet, die nach Formel (8) die Länge $R_L$ eines Entfernungstores bestimmt. Wegen der möglichen Zielwanderung bei einem Wechsel der Pulswiederholfrequenz von einem in ein benachbartes Entfernungstor, ist es vorteilhaft, die Anzahl $M_j$ der Entfernungstore innerhalb einer Pulswiederholdauer als ganzzahlige Vielfache der Zahl zwei zu wählen. Damit entsteht eine Aufteilung des eindeutigen Entfernungsbereiches in doppelte Entfernungstore entsprechend Fig.8. Somit ist der eindeutige Entfernungsbereich in $M_j/2$ sogenannter doppelter Entfernungstore unterteilbar. Ein doppeltes Entfernungstor besteht also aus einem vorderen und einem hinteren Entfernungstor (bezogen auf die Richtung Antenne-Ziel). Die vorderen Entfernungstore werden mit einem geraden Laufindex bezeichnet und die hinteren mit einem ungeraden Laufindex. In Fig.9a bis Fig.9d ist die mögliche Entfernungsposition eines Zieles (mit X gekennzeichnet) in verschiedenen Entfernungstoren, die zu unterschiedlichen PRFs gehören, dargestellt. Es sind vier mögliche Fälle vorhanden. Ist $v_1 > 0$ und befindet sich das Ziel X bei der aktuellen PRF in einem vorderen Entfernungstor, so befindet es sich in den zeitlich zurückliegenden PRFs in dem gleichen doppelten Entfernungstor. Erscheint das Ziel dagegen in bei der aktuellen PRF in einem hinteren Entfernungstor, und ist $v_1 > 0$, so ist es möglich, daß das Ziel in den zurückliegenden PRFs in einem anderen doppelten Entfernungstor war.

Anhand der Fig.9a bis 9d geht außerdem hervor, daß für $v_1 < 0$ genau umgekehrte Verhältnisse vorliegen.

Es ist ersichtlich, daß bei einer optimalen Ausnutzung der Pulswiederholfrequenzen verhindert werden muß, daß ein Ziel beim Wechsel der Pulswiederholfrequenz von einem doppelten Entfernungstor in ein benachbartes doppeltes Entfernungstor wandert, denn dann entsteht ein störender Fehler bei der Entfernungsbestimmung.

Es ist also bei folgenden Fällen eine Korrektur innerhalb der Matrizen $F_{jk}(m,i)$ durchzuführen:

Fall 1: Es ist $v_1 > 0$ und das Ziel befindet sich bei der aktuellen PRF in einem hinteren Entfernungstor.

Fall 2: Es ist $v_1 < 0$ und das Ziel befindet sich bei der aktuellen PRF in einem vorderen Entfernungstor.

Es werden nun folgende Korrekturen durchgeführt:

Zu Fall 1, $v_1 > 0$ :

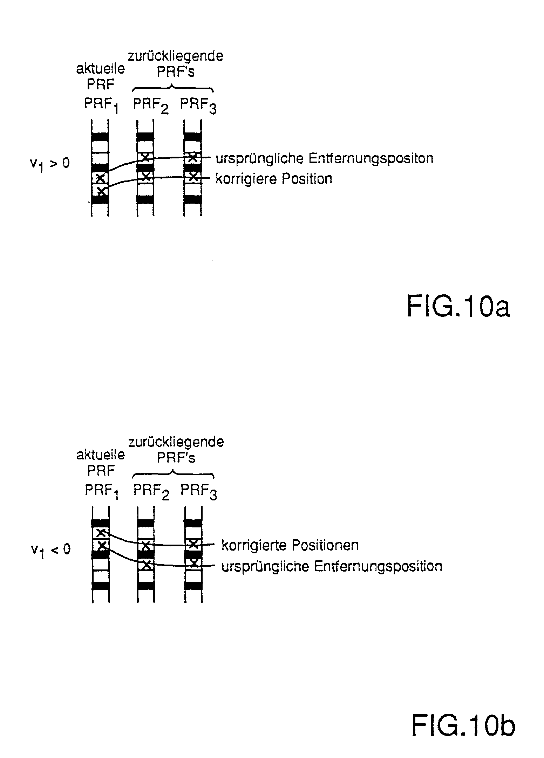

Das Ziel X muß bei der aktuellen PRF und allen zeitlich zurückliegenden PRFs um ein Entfernungstor nach vorn gesetzt werden. Diese Korrektur der Zielposition ist in Fig.10a dargestellt.

Zu Fall 2, $v_1 < 0$ :

Das Ziel X muß bei der aktuellen PRF und allen zeitlich zurückliegenden PRFs um ein Entfernungstor nach hinten gesetzt werden. Diese Korrektur der Zielposition ist in Fig.10b dargestellt.

Im folgenden wird nun die Wahl der Pulswiederholfrequenzen beschrieben. Dabei ergibt sich für den Fall entsprechend Formel (11) für die maximale Anzahl M der Enfernungstore

$$M \leq 46 \tag{22}.$$

Da nun eine Entfernungsbestimmung mit mehr als einer Pulswiederholfrequenz nur auf ein doppeltes Entfernungstor genau sein kann, wird im folgenden lediglich mit dieser Entfernungseinteilung (Raster mit doppelten Entfernungstoren) gearbeitet. Für die maximale Anzahl M' der doppelten Entfernungstore gilt dann

$$M' = M/2 \leq 23 \tag{23}.$$

Die untere Grenze von M' ergibt sich aus einem maximal anzunehmenden Tastverhältnis (duty-cycle) von 0,4 und der Wahl der Sendecode-Länge L zu

$$L/(2 \bullet 0,4) \leq M' \leq 23 \tag{24}.$$

Die Pulswiederholdauern $T_j = 1/PRF$ sind nun direkt proportional der Anzahl ihrer doppelten Entfernungstore $M_j'$ entsprechend der Formel

$$T_j = (4 \bullet M_j' \bullet R_L)/c \tag{25}.$$

Im folgenden wird nun die Zusammensetzung der PRFs bestimmt, bei welcher mögliche Ausblendverluste sowie der gewünschte erweiterte Eindeutigkeitsbereich berücksichtigt werden müssen.

Werden zur Entfernungsbestimmung lediglich zwei verschiedene Pulswiederholfrequenzen benutzt, so gilt nach Formel (12):

$$i_e' = i_{m1}' + u_1 \cdot M_1' \text{ mit } 0 \leq i_{m1}' \leq M_1'$$

$$i_e' = i_{m2}' + u_2 \cdot M_2' \text{ mit } 0 \leq i_{m2}' \leq M_2' \tag{26}$$

Diese Formeln unterscheiden sich von Formel (12) lediglich dadurch, daß gestrichene (mit "'" bezeichnete) Laufvariable verwendet werden. Diese beziehen sich auf die im folgenden durchgeführte Verwendung von doppelten Entfernungstoren. Sind $M_1'$ und $M_2'$ teilerfremd, so gilt für den erweiterten Eindeutigkeitsbereich die Formel

$$0 \leq ie' < M_1' \cdot M_2' \tag{27}$$

Wird jetzt entsprechend Formel (23) $M_1' = 23$ und $M_2' = 22$ gewählt, so ermittelt sich der eindeutige Entfernungsbereich $R_w$ entsprechend der Formel

$$R_w = 22 \bullet 23 \bullet 50 \text{ m} \tag{28}$$
$$R_w = 25{,}3 \text{ km} .$$

Da nun im Realfall bei der Verwendung von nur zwei Pulswiederholfrequenzen die Ausblendverluste in störender Weise hoch sind, ist die beschriebene zwei aus zwei Detektion nicht sinnvoll. Daher werden im folgenden beginnend mit $M_1' = 23$ die nächsten drei kleineren Zahlen, die teilerfremd zueinander sein müssen, verwendet und eine zwei aus vier Detektion mit folgender PRF-Zusammensetzung gewählt

$$M_j' = (23, 22, 21, 19) \tag{29}$$

Die Codelänge L wird zu L = 7 gewählt. Mit diesen Parametern ergibt sich eine Wahrscheinlichkeit $P_{2D}$, daß ein erfaßtes Ziel bei vier aufeinanderfolgenden PRFs mindestens zweimal nicht ausgeblendet ist zu

$$P_{2D} = 0{,}974 \tag{30}$$

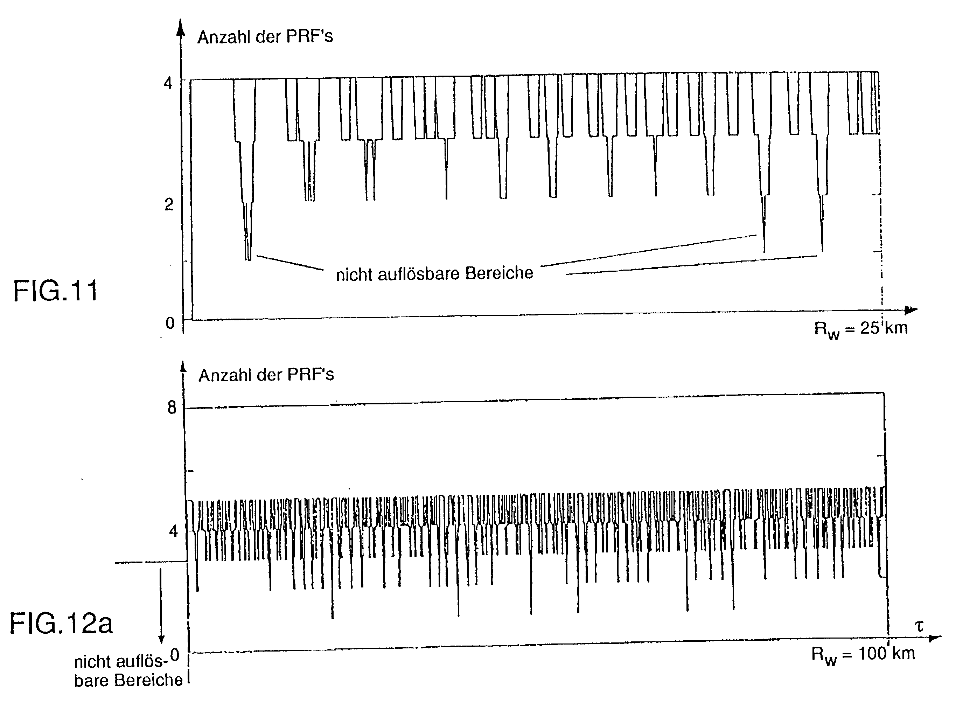

Das heißt, von 97,4% der detektierten Ziele kann innerhalb des in Formel (28) angegebenen Bereiches $R_w = 25{,}3$ km die Entfernung eindeutig bestimmt werden. Fig.11 zeigt ein zugehöriges Belegungsdiagramm in Abhängigkeit von der Entfernung bei vier verschiedenen PRFs. Es sind die nicht auflösbaren (Entfernungs-)Zonen dargestellt.

Soll ein größerer erweiterter Eindeutigkeitsbreich verwendet werden, so wird zur Entfernungsbestimmung eine dritte Pulswiederholfrequenz benötigt. Es gelten dann analog zu Formel (26) die Formeln

$$i_e' = i_{m1}' + u_1 \cdot M_1' \text{ mit } 0 \leq i_{m1}' < M_1'$$

$$i_e' = i_{m2}' + u_2 \cdot M_2' \text{ mit } 0 \leq i_{m2}' < M_2'$$

$$i_e' = i_{m3}' + u_3 \cdot M_3' \text{ mit } 0 \leq i_{m3}' < M_3' \tag{31}$$

Für die Zusammenstellung der PRFs wird gefordert, daß der erweiterte Eindeutigkeitsbereich $R_w$ größer als 100 km sein soll, das heißt, es gelten die Formeln

$$R_w > 100 \text{ km} \tag{32}$$

$$R_w = M_1' \cdot M_2' \cdot M_3' \cdot 50\ m > 100\ km, \text{ daraus folgt}$$

$$M_1' \cdot M_2' \cdot M_3' > 2000 \tag{33}.$$

Eine mögliche Kombination von teilerfremden ganzen Zahlen, welche die Ungleichung (33) erfüllen, ist die Kombination der Zahlen $M_1' = 11$, $M_2' = 13$, $M_3' = 14$. Fügt man nun die nächsten zwei größeren teilerfremden Zahlen hinzu, so ergeben sich die folgenden fünf Pulswiederholfrequenzen

$$M_j' = (11, 13, 14, 15, 17) \tag{34}.$$

Als Beispiele für die Sendecodelänge L wird nun L = 5 und L = 7 gewählt. Mit diesen Parametern ergibt sich für die Wahrscheinlichkeit $P_{3D}$, daß ein Ziel bei fünf aufeianderfolgenden PRFs mindestens dreimal nicht ausgeblendet wird:

$$\text{bei } L = 5 \text{ ist } P_{3D} = 0{,}955 \text{ und}$$

$$\text{bei } L = 7 \text{ ist } P_{3D} = 0{,}891 \tag{35}.$$

Demnach können in Abhängigkeit von der gewählten Codelänge 90% bis 95% der detektierten Ziele in dem gewählten Entfernungs-Eindeutigkeitsbereich größer 100 km eindeutig aufgelöst werden.

Fig.12a zeigt das Belegungsdiagramm für die drei aus fünf Detektion entsprechend Formel (34) in Abhängigkeit von der Entfernung bei fünf verschiedenen PRFs bei einer Sendecodelänge L = 5.

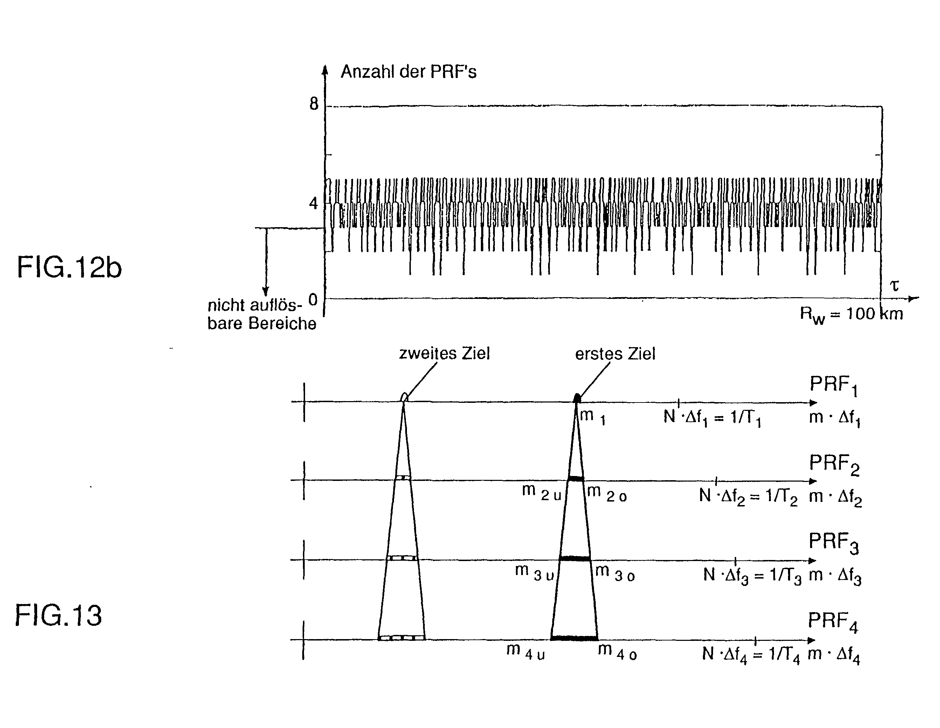

Fig.12b zeigt das Belegungsdiagramm für die drei aus fünf Detektion entsprechend Formel (34) in Abhängigkeit von der Entfernung bei fünf verschiedenen PRFs bei einer Sendecodelänge L = 7.

Da bei dem Verfahren eine sehr hohe Geschwindigkeitsauflösung vorhanden ist, können auch sogenannte Mehrfachziele getrennt werden. Es ist ersichtlich, daß sich Mehrfachziele mit ungefähr gleicher Geschwindigkeit nicht trennen lassen. Dieses ist aber eine Einschränkung mit einen vernachlässigbaren Verlust, was anhand des folgenden Beispiels dargelegt wird. Für die Auflösung $dv_j$ in Geschwindigkeitsrichtung gilt die Formel

$$dv_j = \lambda/(2 \cdot N \cdot T_j) = \lambda/(4 \cdot M_j' \cdot N \cdot T_a) \tag{36},$$

wobei $\lambda$ die Wellenlänge des Sendesignals bedeutet. Werden nun beispielsweise die Parameter N = 2048, $\lambda = 0{,}03$ m, $T_a = 166{,}67$ nsec (entspricht $R_L = 25$ m) gewählt, so ergibt sich mit einer Pulswiederholfrequenz $M_j' \geq 11$ als obere Grenze für die Auflösung $dv_j$ in Geschwindigkeitsrichtung:

$$dv_j \leq 2{,}0 \text{ m/sec.}$$

Da für alle Pulswiederholfrequenzen die gleiche DFT-Länge N gewählt wird, sind die Frequenzauflösungen $\Delta f_j$ mit j = 1, 2,...,x verschieden entsprechend der Formel

$$\Delta f_j = 1/(N \cdot T_j) = (1/N) \cdot PRF_j \tag{37}.$$

Deshalb erscheint ein Ziel, dessen Geschwindigkeit sich nicht ändert, bei einem Wechsel der PRF in einem anderen (Frequenz-)Filter. Ein Ziel, dem bei einer aktuellen PRF das Filter $m_1$ zugeordnet wird, erscheint bei einer anderen PRF in einem durch folgende Projektion hervorgehenden Filter $m_j$ :

$$m_j = \text{Int}[m_1 \cdot (PRF_1/PRF_j)] \text{ mit } j = 2, ...,x \tag{38}.$$

Hier muß nun, entsprechend der vorhergehenden Beschreibung, der Fall betrachtet werden, daß sich die Geschwindigkeit eines Zieles beim Wechsel der PRF ändert. Eine mathematische Behandlung dieses Falles ist schwierig, da sich der Beschleunigungsterm nicht aus der Datenmatrix ergibt. Für das folgende wird daher ein größtmöglicher Beschleunigungsterm von 7g (g = Erdbeschleunigung) angenommen und die Geschwindigkeitsänderung durch eine lineare Beziehung beschrieben. Dann wird analog zu Formel (16) die maximale Geschwindigkeitsänderung $\Delta v_j$ ermittelt zwischen der aktuellen Matrix bis zur j-ten zurückliegenden Matrix entsprechend der Formel

$$\Delta v_j = |v_j - v_1| \leq 7 \cdot |g| \cdot (j-1) \cdot (T_v/x) = |\Delta v_j|_{max},$$

$$\text{mit } j = 2, ...,x \tag{39}.$$

Wird dieser Ausdruck nun in Formel (38) eingefügt, so ergibt sich ein Bereich, der durch $m_{ju}$ und $m_{jo}$ begrenzt ist und in dem das Ziel in den zurückliegenden Matrizen gewesen sein kann entsprechend den Formeln

$$m_{ju} = Int\left[ m_1 \cdot \frac{PRF_1}{PRF_j} - \frac{2 \cdot \Delta v_j \cdot N}{\lambda \cdot PRF_j} \right]$$

$$(40)$$

$$m_{jo} = Int\left[ m_1 \cdot \frac{PRF_1}{PRF_j} + \frac{2 \cdot \Delta v_j \cdot N}{\lambda \cdot PRF_j} \right] \cdot$$

Fig.13 zeigt diesen Sachverhalt bei einer Mehrzielauflösung in Geschwindigkeitsrichtung unter Berücksichtigung einer konstanten Geschwindigkeitsänderung eines Zieles. Ein Treffer, das heißt eine zuverlässige Detektion, eines ersten Zielse bei $m_1$ ist nur dann zuverlässig, wenn bei einer zwei aus x-Detektion der PRFs mindestens einmal noch ein weiterer Treffer bei einer anderen PRF auftritt, beziehungsweise bei einer drei aus x-Detektion mindestens zwei weitere Treffer bei zwei weiteren PRFs innerhalb des Bereiches $[m_{ju}, m_{jo}]$ erfolgen. Die den Treffern entsprechenden Entfernungsinformationen werden nach den Formeln (26) beziehungsweise (31) zur Entfernungsauflösung verwendet. Sind nun in einer vorgebbaren Vergleichs-PRF mehrere Treffer innerhalb des Bereiches $[m_{ju}, m_{jo}]$ vorhanden, so wird derjenige Treffer, welchem die größte Amplitude zugeordnet werden kann, zur Ermittlung der Entfernung verwendet. Dabei ist zu berücksichtigen, daß bei der Entfernungsauflösung die einfachen Entfernungstore in doppelte Entfernungstore umgewandelt werden müssen.

**Patentansprüche**

**1.**  Verfahren zur Detektion eines Zieles mittels einer HPRF-Radaranlage, wobei

- zeitlich nacheinander mehrere vorgebbare Folgen von modulierten Sendeimpulsen mit jeweils einer vorgebbaren Pulsfolgefrequenz ausgesandt werden,

- eine vorgebbare Anzahl von Pulsfolgefrequenzen verwendet wird,

- nach jeder ausgesandten Folge zyklisch auf eine andere Pulsfolgefrequenz umgeschaltet wird,

- von einem Ziel reflektierte Sendeimpulse von der Radaranlage empfangen und demoduliert werden derart, daß im Videobereich der Radaranlage den Sendeimpulsen entsprechende Echoimpulse entstehen,

- aus den zu einer Folge gehörenden Echoimpulsen die Geschwindigkeit eindeutig und die Entfernung des Zieles mehrdeutig ermittelt werden und

- durch einen Vergleich der bei verschiedenen Pulsfolgefrequenzen ermittelten mehrdeutigen Entfernungen des Zieles die eindeutige Entfernung des Zieles ermittelt wird,

**dadurch gekennzeichnet,**

- **daß** eine Entfernungs-Doppler-Matrix mit einer vorgebbaren Anzahl von Entfernungs-Doppler-Zellen gebildet wird, wobei in Geschwindigkeitsrichtung jeweils eine vorgebbare Anzahl von Doppler-Zellen zu einem Geschwindigkeitsbereich zusammengefaßt werden,

- **daß** die Geschwindigkeitsbereiche in vorgebbarer Weise in Abhängigkeit von den Entfernungstoren und dem zeitlichen Abstand der ausgesandten Bursts gebildet werden, beziehungsweise den von einem Ziel zwischen zwei Bursts überflogenen Entfernungstoren,

- **daß** in den Geschwindigkeitsbereichen eine zyklische Vertauschung der Entfernungszellen in Abhängigkeit der von dem Ziel überflogenen Entfernungstore erfolgt,

- **daß** die zu jeder Pulswiederholfrequenz gehörenden Entfernungstore paarweise zusammengefaßt werden und bezüglich der Antennenposition in ein vorderes und ein hinteres Entfernungstor unterteilt werden,

- **daß** die bei einer Pulswiederholfrequenz vorhandene mehrdeutige Entfernungsposition beseitigt wird durch Vergleich der Entfernungsmessung bei mindestens drei Pulswiederholfrequenzen,

- **daß** die Auflösung der Mehrdeutigkeiten der Entfernung ermittelt wird durch Vergleich der Entfernungstore bei den verschiedenen Pulswiederholfrequenzen, wobei eine Umpositionierung um ein Entfernungstor in Abhängigkeit von der Geschwindigkeitsrichtung genau dann erfolgt, wenn ein doppeltes Entfernungstor überschritten wird und

- **daß** aus der Entfernungslage der zu den mindestens drei Pulswiederholfrequenzen gehörenden mindestens drei Entfernungstore die eindeutige Entfernung des Zieles ermittelt wird.

2. Verfahren zur Detektion eines Zieles nach Anspruch 1, **dadurch gekennzeichnet, daß** möglicherweise vorhandene Mehrfachziele mittels ihrer unterschiedlichen Geschwingigkeiten sowie der höchstmöglichen Beschleunigung getrennt werden.

3. Verfahren zur Detektion eines Zieles nach Anspruch 1 oder Anspruch 2 gekennzeichnet zur Verwendung in einem Bordradar.

4. Verfahren zur Detektion eines Zieles nach einem der vorhergehenden Ansprüche gekennzeichnet zur Verwendung in einem Bordradar eines Flugzeuges.

**Claims**

1. Method for detection of a target by means of an HPRF radar system, in which

- a number of sequences, which can be predetermined, of modulated transmission pulses are transmitted successively in time, each at a pulse repetition frequency which can be predetermined,

- a number of pulse repetition frequences which can be predetermined are used,

- after each transmitted sequence, a cyclic change is made to another pulse repetition frequency,

- transmission pulses reflected from a target are received and demodulated by the radar system such that echo pulses corresponding to the transmission pulses are produced in the video area of the radar system,

- the echo pulses associated with a sequence are used to determine the speed of the target unambiguously, and its range ambiguously, and

- the unambiguous ranges of the target is determined by comparing the ambiguous ranges of the target determined at a different pulse repetition frequences,

<u>**characterized**</u>

- **in that** a range Doppler Matrix is formed with a number of range doppler cells which can be predetermined, with a number of doppler cells, which can be predetermined, in each case being combined in the speed direction to form a speed band,

- **in that** the speed bands are formed in a manner which can be predetermined as a function of the range gates and the time interval between the transmitted bursts, and/or from the range gates which the target passes over between two bursts,

- **in that** the range cells are interchanged cyclically in the speed bands as a function of the range gates over which the target passes,

- **in that** the range gates associated with each pulse repetition frequency are combined in pairs, and are subdivided into a front range gate and a rear range gate with respect to the antenna position,

- **in that** the ambiguous range position which exists with one pulse repetition frequency is overcome by comparing the range measurement at at least three pulse repetition frequencies,

- **in that** the resolution of the range ambiguities is determined by comparing the range gates at the various pulse repetition frequencies, with repositioning by one range gate being carried out as a function of the speed of direction when, and only when, a duplicated range gate is exceeded, and

- **in that** the range locus of the at least three range gates associated with the at least three pulse repetition frequences is used to determine the unambiguous range of the target.

2. Method for detection of a target according to Claim 1, **characterized in that** any multiple targets which may be present are separated by means of their different speeds and the highest possible acceleration.

3. Method for detection of a target according to Claim 1 or Claim 2 **characterized by** use in an on-board radar.

4. Method for detection of a target according to one of the preceding claims, **characterized by** use in an aircraft on-board radar.


## Revendications

1. Procédé pour détecter une cible utilisant un radar HPRF, avec lequel

- plusieurs trains prédéfinis d'impulsions émises modulées sont émis chronologiquement ayant chacun une fréquence de train d'impulsions prédéfinie,
- un nombre prédéfini de fréquences de train d'impulsions est utilisé,
- il se produit une commutation cyclique à une autre fréquence de train d'impulsions après chaque train émis,
- les impulsions émises réfléchies par une cible sont détectées et démodulées par le radar de manière à obtenir dans la zone vidéo du radar les impulsions d'écho correspondant aux impulsions émises,
- la vitesse est déterminée de manière explicite et la distance de la cible est déterminée de manière ambiguë à partir des impulsions d'écho faisant partie d'un train et
- la distance explicite de la cible est déterminée par une comparaison des distances ambiguës de la cible déterminées avec les différentes fréquences de trains d'impulsions,

**caractérisé en ce**

- qu'un tableau doppler de la distance est formé avec un nombre prédéfini de cellules doppler, un nombre donné de cellules doppler étant à chaque fois regroupé en une plage de vitesses dans une direction de vitesse,
- que les plages de vitesses sont formées de manière prédéfinie en fonction des portes de distance et de l'écart dans le temps entre les trains émis ou alors des portes de distance franchies par une cible entre deux trains,
- qu'un échange cyclique des cellules de distance a lieu dans les plages de vitesses en fonction des portes de distance franchies par la cible,
- que les portes de distance faisant partie de chaque fréquence de répétition des impulsions sont regroupées par paires et réparties en une porte de distance avant et arrière par rapport à la position de l'antenne,

- **que** la position de distance ambiguë présente avec une fréquence de répétition des impulsions est éliminée en comparant la mesure de la distance à au moins trois fréquences de répétition des impulsions,
- **que** la résolution des ambiguïtés de la distance est déterminée en comparant les portes de distance aux différentes fréquences de répétition des impulsions, un changement de position d'une porte de distance en fonction de la direction de la vitesse étant effectuée précisément lorsqu'une double porte de distance est franchie et
- **que** la distance explicite de la cible est déterminée à partir de la distance des au moins trois portes de distance faisant partie des au moins trois fréquences de répétition des impulsions.

2. Procédé pour détecter une cible selon la revendication 1, **caractérisé en ce que** les cibles multiples éventuellement présentes sont différenciées à l'aide de leurs différentes vitesses et de l'accélération maximale possible.

3. Procédé pour détecter une cible selon la revendication 1 ou la revendication 2, caractérisé pour une utilisation dans un radar embarqué.

4. Procédé pour détecter une cible selon l'une des revendications précédentes, caractérisé pour une utilisation dans un radar embarqué à bord d'un aéronef.

$b_\tau(t)$

$L = 5$    Barkercode

$0 \quad T_a$ ... $\tau$ ... $T \quad t$

**FIG.1**

$\underline{V}_r = \underline{V}_F - \underline{V}_a$

FL

$\underline{V}_a$

$r$

A

Z

$\underline{V}_F$

$\underline{r}_0$

$\underline{V}_F =$ Geschwindigkeitsvektor des Zieles

$\underline{V}_a =$ Geschwindigkeitsvektor der Antenne

$\underline{r}_0 =$ Einheitsvektor der Verbindungslinie Antenne-Ziel

**FIG.2**

$y(l)$

$* \quad M \quad N_t \quad 2M \quad 3M \quad (N-1)M \quad NM \quad l$

$m_F(l)$

$1$

$L-1$

$-1$

$y(l) * m_F(l) = y_b(l)$

$M \quad N_t \quad 2M \quad 3M \quad (N-1)M \quad NM \quad l$

$N_t + L - 1 \qquad N_t = \text{Int.} \{t_r / T_a\}$

**FIG.3**

15

Entfernung
$R_e$

$i$   $a_c(k,i)$

$M-1$ — vollständig ausgeblendet

$M-(L-1)/2-2$ — mehr als die Hälfte ausgeblendet

keine Ausblendverluste

weniger als die Hälfte ausgeblendet

$L-2$

$(L-1)/2$

$0$

$0$   $1$   $2$   ...   $N-1$   $k$

$T$   $2T$   ...   $NT$   Zeit

**FIG.4**

EP 0 919 834 B1

Entfernung

$i$   $F(m,i)$

$M-1$

$M-(L-1)/2-2$

$M-L$ — weniger als die Hälfte ausgeblendet

keine Ausblendverluste

$L-2$

$(L-1)/2$

$0$

$0$   $1$   $2$   ...   $N-1$   $m$

$\frac{1}{NT}$   $\frac{2}{NT}$   ...   $\frac{1}{T}=PRF$   Frequenz

**FIG.5**

$$s(t)e^{-2j\pi f_0 t}$$

FIG.6

FIG.7

FIG.8

FIG.9

FIG.10a

FIG.10b

EP 0 919 834 B1

FIG.11

Anzahl der PRF's

nicht auflösbare Bereiche

$R_W = 25$ km

FIG.12a

Anzahl der PRF's

nicht auflösbare Bereiche

$R_W = 100$ km

$\tau$

EP 0 919 834 B1

**FIG.12b**

Anzahl der PRF's

8

4

nicht auflösbare Bereiche

0

$\tau$

$R_W = 100\ km$

**FIG.13**

zweites Ziel          erstes Ziel

$PRF_1$

$m_1$

$N \cdot \Delta f_1 = 1/T_1$     $m \cdot \Delta f_1$

$PRF_2$

$m_{2u}$   $m_{2o}$

$N \cdot \Delta f_2 = 1/T_2$     $m \cdot \Delta f_2$

$PRF_3$

$m_{3u}$   $m_{3o}$

$N \cdot \Delta f_3 = 1/T_3$   $m \cdot \Delta f_3$

$PRF_4$

$m_{4u}$       $m_{4o}$

$N \cdot \Delta f_4 = 1/T_4$   $m \cdot \Delta f_4$